# EUROPEAN PATENT APPLICATION

(11) **EP 1 937 034 A1**
(43) Date of publication of application: **25.06.2008**
(21) Application number: 06446005.8
(22) Date of filing: 21.12.2006
(51) Int. Cl.: H05B 6/80, B01J 19/12

(54) **Microwave heating device**

(71) Applicant: Biotage AB, 753 18 Uppsala (SE)
(72) Inventor: Fagrell, Magnus, 756 46, Uppsala (SE)
(74) Representative: Holmberg, Nils Anders Patrik

(57) **Abstract**

Microwave heating device comprising a microwave applicator (4, 5) connected to a microwave generator, a reaction vessel (19) enclosing a reaction chamber is adapted to be arranged in the applicator to heat a load (18) arranged in the reaction chamber, a load temperature measurement means (7,8) is arranged to measure the load temperature. The load temperature measurement means is adapted to measure the temperature distribution of the load by measuring the distribution of the emitted infrared light from the load.

## Description

### Field of the invention

The present invention relates to a device and a method according to the preambles of the independent claims.

### Background of the invention

Today it is rather complicated and difficult to optimize the efficiency/heating conditions in a microwave reaction vessel using existing methods. By measuring the reflected microwave signal an indication that something in the cavity absorbs energy is obtained but it does not say anything about the physical position of the energy absorbing item and the distribution of the absorption. Measuring the temperature in the reaction vessel gives you a better understanding but it is usually limited to one single spot at the surface of the reaction vessel or a single spot in the reaction volume. However, such measurements do not include information regarding the surrounding temperature and if the measured temperature is a maximum or not.

US-5,241,148 relates to an apparatus for measuring heating temperature in a high electric field of microwaves. An infrared radiation thermometer is disposed outside the microwave heating chamber. A probe, formed of a microwave transparent material is disposed inside the microwave heating chamber, and is adapted to transmit the infrared rays generated from the substance to be heated, via a lens and an optical cable, to the infrared radiation thermometer.

Thus, the object of the present invention is to obtain information from the load in the reaction vessel from a thermal point of view in order to optimize the reaction conditions.

### Summary of the invention:

The above-mentioned object is achieved by the present invention according to the independent claim.

Preferred embodiments are set forth by the independent claims.

The inventor has realized that there is a need to visualize the whole reaction vessel from a thermal point of view and also to identify the temperature distribution reflecting the distribution of the electromagnetic field. It is especially important to have this information when trying to optimize the conditions inside a reaction chamber where e.g. the load continuously flows through the chamber where the temperature and the heating zone moves depending on flow rate and the dielectric properties of the processed reaction mixture.

The present invention relates to a microwave heating device provided with a temperature measurement means being an infrared light detecting device, e.g. an infrared light camera for measuring IR radiation or an array of infrared detectors to measure the temperature on parts, or the whole surface, of the reaction vessel and surrounding components that effects the heating profile. By determining the heat distribution and changing relevant parameters in dependence thereto an optimization of the microwave heating is achieved. This optimization may be done manually or automatically by using software with capability to interpret the image signal from the infrared camera or the infrared diode array and based on that interpretation adjust relevant parameters. Relevant parameters in this case may be, physical position of components and/or the reaction chamber, tuning devices, frequency, material properties, flow rate in a flow cell, reaction mixture composition etc.

### Short description of the appended drawings

Figure 1 is a cross-sectional view of a microwave heating device for heating a continuously flowing load according to a first preferred embodiment of the present invention.
Figure 2 is a cross-sectional view of a microwave heating device for heating a continuously flowing load according to a second preferred embodiment of the present invention.
Figure 3 is a cross-sectional view of a microwave heating device for heating a fixed load according to a third preferred embodiment of the present invention.
Figure 4 is a cross-sectional view of a microwave heating device for heating a fixed load according to a fourth preferred embodiment of the present invention.
Figure 5 is a schematic block diagram of the microwave heating device according to the present invention.
Figure 6 is a simplified flow diagram illustrating the method according to the present invention.

### Detailed description of the invention

The present invention will now be described in detail with references to the appended figures.
The microwave heating device comprises a microwave applicator 4, 5 connected to a microwave generator (not shown), a reaction vessel 2, 10, 19 enclosing a reaction chamber 3, 18 adapted to be arranged in the applicator to heat a load arranged in the reaction chamber. The microwave heating device further comprises a load temperature measurement means 7, 8, 11, 12, 13 arranged to measure the load temperature. The load temperature measurement means is adapted to measure the temperature distribution of the load by measuring the distribution of the emitted infrared light from the load, or from the surface of the reaction vessel and then obtaining an indirect measurement of the temperature of the load.

The emitted infrared light is preferably measured in a two dimensional surface of the load or more particularly the surface of the reaction vessel, facing the temperature measurement means.. A three dimensional representation may be obtained by arranging two cameras or arrays in different position relative to each other. Preferably rotated 90 or 180 degrees in the same plan and around the centre axle of the reaction vessel.

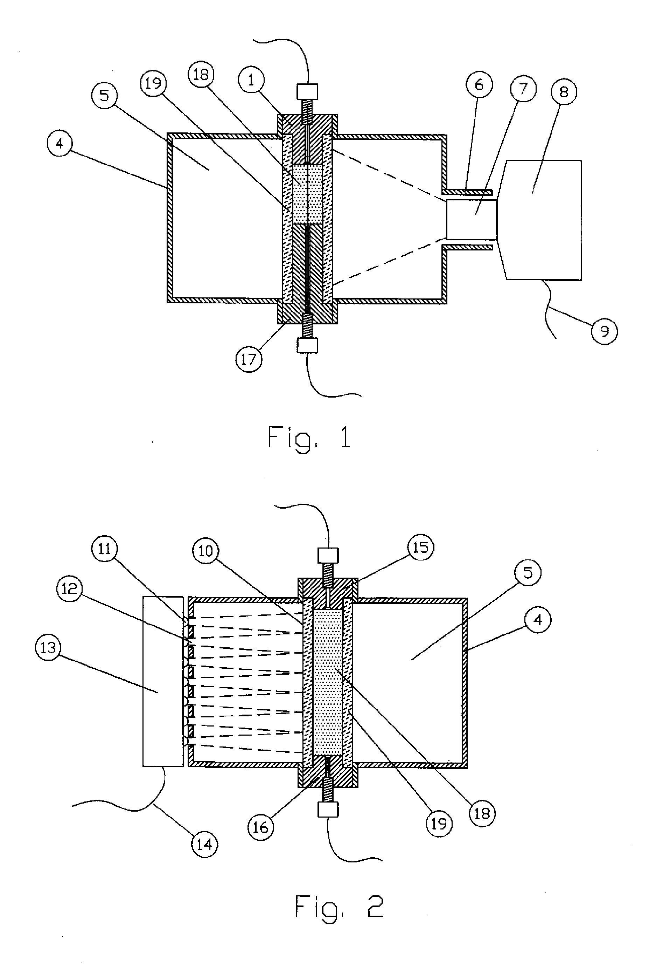

Two main types of the microwave heating device according to the present invention may be identified. For the first type the reaction vessel is adapted to receive a load that continuously flows through the reaction chamber. Two different embodiments of this first type are illustrated in figures 1 and 2.

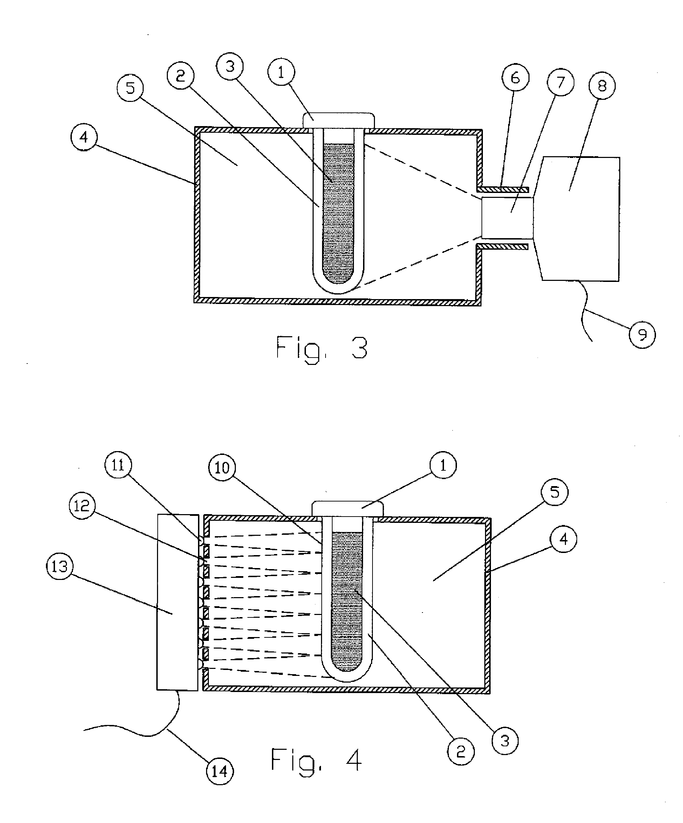

For the second type the reaction vessel instead is adapted to receive a specific volume of load to be heated. Two different embodiments of this second type are illustrated in figures 3 and 4.

The four different embodiments will now be described in detail.

Figure 1 is a cross-sectional view of a microwave heating device of the first type for heating a continuously flowing load according to a first preferred embodiment of the present invention.

Figure 1 shows a microwave cavity 5 with a reaction vessel 19 designed for continuous flow application. The flow cell comprises a preferably tube-like reaction vessel 19 preferably made from a material that at least partly is transparent to infrared light waves radiated from the load in the reaction chamber 18. The reaction vessel may e.g. be made from quartz, which is transparent to IR-waves. Materials not transparent to IR-waves may also be used; the temperature of the load is then indirectly measured by measuring the IR-waves emitted from the reaction vessel surface.

The reaction vessel is provided with two end pieces 1,17 that creates the reaction chamber 18 together with the reaction vessel 19. The cavity 5 has an opening 6 dimensioned to receive a part 7 of load temperature measurement means, herein an infrared light sensitive camera 7,8 fitted to the opening 6. The opening 6 may be placed anywhere on the cavity 5.

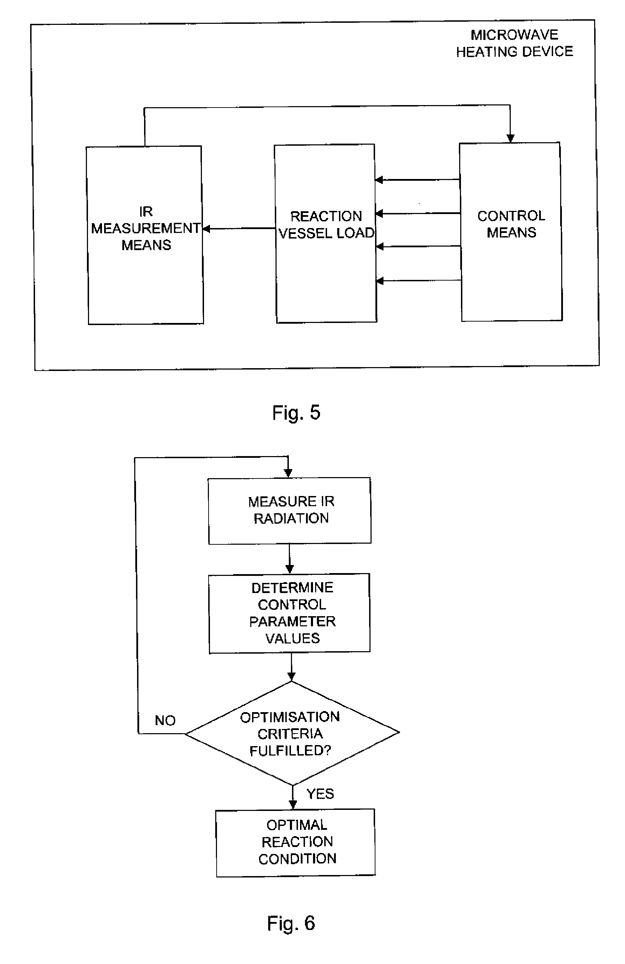

If necessary, a microwave non-transparent material (not shown) may be placed between the camera and the hole in the cavity to prevent microwaves to radiate outside the cavity. The non-microwave transparent material has to transmit at least a part of the infrared radiation to be measured. The camera has an aperture that covers a part of, or the entire reaction chamber. The IR camera may be arranged to display the result of the measurement directly as an image on a screen (not shown) by transmitting the captured temperature data via a connection 9 to a control means (see fig. 5), e.g. a computer, and to a screen connected to the control device. The image may then be used by an operator to optimize or control the thermal conditions in the flow cell by adjusting relevant parameters. The image may also be used to monitor and control a process within specified limits.

Figure 2 is a cross-sectional view of a microwave heating device of the first type, for heating a continuously flowing load according to a second preferred embodiment of the present invention.

According to this second embodiment the load temperature measurement means 11,12,13 is an array of infrared light detecting sensors 11, preferably infrared light detecting diodes. The diodes may be arranged in a row, as illustrated in the figure, but other configurations are possible, e.g. two or three rows of diodes, in order to cover a larger part of the reaction chamber.

The number of diodes may differ depending on the size of the reaction vessel and the aperture/viewing angle of the discrete diodes. The diodes are mounted in a holder 13 or discretely mounted directly on the cavity wall. The diodes are exposed to the infrared radiation from the reaction vessel via a number of holes 12 or a slot in the cavity wall. The signal from the diode array is measured and may be displayed on a screen directly or processed by a dedicated software to determine a curve as described in connection with the first embodiment. The displayed result may then be used by an operator to optimize the heating conditions by adjusting relevant parameters such as microwave power, frequency, flow rate, shape and position of the reaction chamber, filling material in the reaction chamber etc. The result/curve may also be used to monitor and control a process within specified limits. The signal from the diode array may also be used to automatically control a heating process.

The third and fourth embodiments differ from the above-described first and second embodiments in that the reaction vessel instead is a vial 2 where a load 3 is arranged to be heated. The vial is provided with a removable sealing closure means 1 which is removed upon filling and emptying of the vial.

Figure 3 is a cross-sectional view of a microwave heating device of the second type for heating a fixed load according to a third preferred embodiment of the present invention. The load temperature detecting means is an infrared light sensitive camera 7,8 fitted to the opening 6 in the same way as in the first preferred embodiment and it is herein referred to the description of that embodiment.

Figure 4 is a cross-sectional view of a microwave heating device of the second type for heating a fixed load according to a fourth preferred embodiment of the present invention. The load temperature detecting means 11,12,13 is an array of infrared light detecting sensors 11, preferably light detecting diodes arranged in connection with the microwave cavity in the same way as in the second preferred embodiment described above and it is herein referred to the description of that embodiment.

Figure 5 is a schematic block diagram of the microwave heating device according to the present invention. In figure 5 is illustrated the microwave heating device that further comprises a control means adapted to use one or many control parameter(s), illustrated by horizontal arrows towards the reaction vessel load, determined in dependence of an output signal from the IR measurement means to optimize the reaction conditions. One of the control parameters may be used to control a cooling means (not shown) to cool the load in dependence of the control parameter. Another control parameter may be used to control the flow of the load in case a continuous flow system is used. Still other control parameters may be used to control the frequency of the microwaves and the position of the reaction vessel or chamber.
In one embodiment the control means is adapted to control the generated microwave energy in dependence of the measured temperature transformed to a thermal image and interpreted by an imaging recognition software or visually by an operator in order to optimise the reaction conditions based on the thermal image.

Figure 6 is a simplified flow diagram illustrating the method according to the present invention. The method of optimising the reaction conditions in the microwave heated reaction vessel in a microwave heating device comprises the steps of:
A - measuring the thermal distribution in the reaction vessel,
B - determining control values for one or many control parameters for the microwave heating device based upon the thermal distribution measured in step A, and
C - repeating steps A and B until reaction conditions fulfil predetermined optimisation criteria.
   As mentioned above the control parameters comprises one or many of: the frequency of the microwave energy, the flow rate of the load, the position of the reaction vessel or reaction chamber, material properties, reaction mixture composition.

Examples of optimisation criteria are the position of the heating zone of the load and/or the increase rate of the load temperature.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Microwave heating device comprising a microwave applicator connected to a microwave generator, a reaction vessel (19) enclosing a reaction chamber being adapted to be arranged in said applicator to heat a load (18) arranged in said reaction chamber, a load temperature measurement means (7,8,11,12,13) is arranged to measure the load temperature,
**characterized in that** said load temperature measurement means is adapted to measure the temperature distribution of the load by measuring the distribution of the emitted infrared light from the load.

2. Microwave heating device according to claim 1, wherein the emitted infrared light is measured in a two dimensional surface of the load facing the temperature measurement means.

3. Microwave heating device according to claim 1, wherein the emitted infrared light is measured in a three dimensional surface of the load facing the temperature measurement means.

4. Microwave heating device according to claim 1, wherein that said load temperature measurement means (11,12,13) is an array of infrared light detecting sensors.

5. Microwave heating device according to claim 3, wherein the infrared light detecting sensors are diodes.

6. Microwave heating device according to claim 1, wherein said load temperature measurement means is an infrared light sensitive camera (7,8).

7. Microwave heating device according to claim 5, wherein said infrared light sensitive camera is provided with CCD technology.

8. Microwave heating device according to claim 1, wherein said reaction vessel is tube-like.

9. Microwave heating device according to claim 1, wherein said reaction vessel (19) is made from a material that at least partly is transparent to infrared light.

10. Microwave heating device according to claim 1, wherein the reaction vessel is adapted to receive a load that continuously flows through the reaction chamber.

11. Microwave heating device according to claim 1, wherein the reaction vessel is adapted to receive a specific volume of the load.

12. Microwave heating device according to claim 1, wherein said heating device further comprises a control means adapted to use a control parameter determined in dependence of an output signal from the temperature measurement means to optimize the reaction conditions.

13. Microwave heating device according to claim 11, wherein the heating device further comprises a cooling means to cool the load in dependence of said control parameter.

14. Microwave heating device according to claim 10 and 12, wherein the flow of the load is controlled in dependence of said control parameter.

15. Microwave heating device according to claim 12, wherein said control parameter may be one or many of the frequency of the microwaves, the flow rate of the reaction mixture, the position of the reaction vessel or the reaction chamber.

16. Microwave heating device according to claim 12, wherein said control means is adapted to control the generated microwave energy in dependence of the measured temperature transformed to a thermal image and interpreted by image recognition software or visually by an operator in order to optimise the reaction conditions based on the thermal image.

17. Method of optimising the heating conditions in a microwave heated reaction vessel in a microwave heating device according to any preceding claim, wherein the method comprises the steps of:
A - measuring the thermal distribution in the reaction vessel,
B - determining control values for one or many control parameters for the microwave heating device based upon the thermal distribution measured in step A, and
C - repeating steps A and B until reaction conditions fulfil predetermined optimisation criteria.

18. Method according to claim 17, wherein said control parameters comprises one or many of: the frequency of the microwave energy, the flow rate of the load, the position of the reaction vessel or reaction chamber, material properties, reaction mixture composition.

19. Method according to claim 17 or 18, wherein said optimisation criteria comprises the position of the heating zone of the load and/or the increase rate of the load temperature.
